# EUROPEAN PATENT APPLICATION

(11) **EP 4 283 112 A1**
(43) Date of publication of application: **29.11.2023**
(21) Application number: 22305763.9
(22) Date of filing: 23.05.2022
(51) Int. Cl.: F03B 11/00, B23P 6/00, G01N 21/95, B63G 8/00

(54) **METHOD AND DEVICE FOR REPAIRING A DEFECT OR A DAMAGE ON A METTALIC PIECE OF MATERIAL**

(71) Applicant: GE Renewable Technologies, 38100 Grenoble (FR)
(72) Inventor: THEURER, Charles, Burton, Niskayuna, 12309-1027 (US); HOLOVASHCHENKO, Viktor, Niskayuna, 12309-1027 (US); TAN, Yew Teck, Niskayuna, 12309-1027 (US); FORMAN, Douglas, R, Niskayuna, 12309-1027 (US); DUNCAN, Alexander, Kyle, Niskayuna, 12309-1027 (US); TELLER, Olivier, 38041 GRENOBLE (FR); VAICHERE, Antoine, 38041 GRENOBLE (FR); GAUDION, Sylvain, 38041 GRENOBLE (FR)
(74) Representative: Brevalex

(57) **Abstract**

The invention relates to a method for repairing a damage or a defect (20, 40, 60) in a piece (22) of metallic material, comprising:
a) measuring with at least one sensor (121) of a remote operated vehicle (120) first geometrical data of at least a plurality of points or areas of the defect or damage;
b) based on at least on said first geometrical data, generating data of one or more zones of said defect or damage to excavate;
c) excavating with help of a remote operated vehicle (120) said piece according to said data of one or more zones of said defect or damage to excavate, thereby forming an excavated zone;
d) depositing metallic material (28) with help of a remote operated vehicle in at least part of said excavated zone.

## Description

### TECHNICAL FIELD AND PRIOR ART

The invention relates to a method and a system designed to repair one or more defect(s) or damage(s) in a piece of material, for example a metallic piece, said piece of material being difficult to access by an operator, without for example a platform or without dismantling, or for example requiring work in an environment that presents health and safety risks for an operator, for example in a confined space, and/or at height and/or under suspended load; for example it is a piece or a part of a hydraulic machine and/or a component of a hydroelectric installation, in particular a piece or a part or a component of a runner of a hydro turbine and/or of a pump, in particular of a bulb, or Kaplan, or Francis, or of a pump turbine runner or pump impeller. It applies for example to cavitation damages and cracks. It also applies to industries like the oil and/or gas industry, or to pressure vessels, or to ship building.....

Known methods of repairing a turbine runner require at least dewatering the runner and installing a platform underneath or bringing the runner to a workshop, which usually takes weeks, or even months. This means that the runner has to be dismantled and taken offsite and is usually not available for the power generation for an extended period of time. As a consequence the period between two inspections is long and defects may be missed or allowed to grow to failure.

Additionally, the interblade distance of many modern reversible Francis runners is very short and access is very difficult. Repairs are usually carried out by an operator, who may have to enter the inter-blade channel which presents safety risks.

There is therefore a need to develop a robotized solution and process to repair a turbine faster, more precisely, and without presenting environmental, health and safety ("EHS") risks. There is also a need to develop a semi-automatic robotized process which is a combination of remotely controlled operations, which may be controlled by an operator based on his know-how and experience, and steps carried out automatically so that they can be exactly repeatable and reproducible. This combination of remotely controlled operations and automatic operations makes the process adapted to every situation and reduces the risk of non-quality.

Therefore, a new device and a new method are required to repair more easily a piece of material as mentioned above, for example in an industrial environment, for example a hydraulic machine and/or a component of a hydroelectric installation, in particular in a runner of a hydro turbine, in particular after dewatering the piece of material or the component to be repaired.

A new device and a new method are also required to repair hydraulic machines and/or components of a hydroelectric installation, in particular runners of hydro turbines, in areas where space is limited, for example between blades of the turbine.

### PRESENTATION OF THE INVENTION

The invention relates firstly to a method for repairing a damage or a defect in a piece of metallic material, comprising:
a) measuring with at least one sensor of a remote operated vehicle first geometrical data of at least a plurality of points or areas of the defect or damage;
b) based on at least said first geometrical data, generating data of one or more zones of said defect or damage to excavate;
c) excavating with help of a remote operated vehicle said piece according to said data of one or more zones of said defect or damage to excavate, thereby forming an excavated zone;
d) depositing metallic material with help of a remote operated vehicle in at least part of said excavated zone.

Said step b) may for example comprise a step of selecting and/or generating one or more predefined volume or shape from a plurality of predetermined volumes or shapes; said step of selecting and/or generating one or more predefined volume or shape can be based on a working envelope of the ROV. A dimension of said volume or shape, for example the depth (measured perpendicularly to a lateral extension of the piece), can be adapted based on at least part of the first geometrical data;

Said sensor can for example comprise at least one contactless sensor, for example at least one optical sensor, preferably selected from among a laser, a camera, a lidar and/or a telemeter.

Said method may further comprise, preferably before step d), generating or measuring second geometrical data of at least one undamaged part of the piece of material, preferably surrounding the damage or the defect, said second geometrical data being for example interpolated from measured data.

Step b) can be based on said measured first geometrical data of said defect or damage and said second geometrical data of said at least one undamaged part.

A method according to the invention may further comprise generating third geometrical data comprising data of the piece of metallic material without the defect or damage.

A method according to the invention may further comprise, after step d), a step e) of measuring fourth geometrical data of said repaired piece of material, for example of an upper surface of the material deposited in said at least one excavated zone, and comparing said fourth geometrical data with said third geometrical data.

A method according to the invention may further comprise, before step c), estimating at least one geometrical data of the deepest point or area of said damage or defect, with respect to at least one undamaged portion of said piece of material or with respect to geometrical data of said at least one undamaged portion.

Step c) can comprise excavating down to a level equal or below said deepest point or area.

A method according to the invention may further comprise, after step d), a step f) of eliminating some material from said material deposited during step d).

In a method according to the invention said one or more ROV(s) can be teleoperated to reach the damage or defect and/or step a) and/or step b) and/or step c) and/or step d) can be performed automatically.

In a method according to the invention, said piece can be a part of a hydro power plant, such as a trash rack, or a gate, or a stoplog, or a penstock, or a valve and/or of a turbine component including a spiral case, or a distributor, or a stay ring, or a guide vane, or a stay vane, or a runner, or a discharge ring and/or a draft tube.

The hydro-power plant can for example comprise a hydro turbine of the bulb or Kaplan or Francis or pump type or a reversible pump turbine.

The invention also concerns a system for repairing a damage or a defect in a piece of metallic material, comprising at least one remote operated vehicle (ROV), said system comprising:
a) at least one sensor for measuring first geometrical data of at least a plurality of points or areas of the defect or the damage;
b) means for generating data of one or more zones of said defect or damage to excavate, for example based on at least said measured first geometrical data; for example, said ROV comprises means for sending at least said measured first geometrical data, and means for receiving data of one or more zones of said defect or damage to excavate;
c) at least one tool for excavating said piece according to said data of one or more zones of said defect or damage to excavate;
d) means for depositing material in at least part of said excavated zone.

In a system according to the invention said sensor may comprise at least one contactless sensor, for example at least one optical sensor, preferably selected from among a laser, a camera, a lidar and a telemeter.

Said means for depositing material in at least part of said excavated zone can for example comprise one or more welding tool(s) and/or spray gun(s).

A system according to the invention can comprise a single remote operated vehicle, comprising:
- at least one sensor for measuring first geometrical data of at least a plurality of points or areas of the defect or the damage; it may further comprise means for sending at least said measured first geometrical data, for example to a control system;
- means for receiving, for example from a control system, data of one or more zones of said defect or damage to excavate;
- and at least one tool for excavating said piece according to said data;
- means for depositing material in at least part of said excavated zone.

A system according to the invention can comprise at least a first remote operated vehicle and a second remote operated vehicle; for example:
- said first remote operated vehicle comprises said at least one sensor for measuring first geometrical data of at least a plurality of points or areas of the defect or the damage; it may further comprise means for sending at least said measured first geometrical data, for example to a control system;
- said second remote operated vehicle can comprise means for receiving, for example from a control system, data of one or more zones of said defect or damage to excavate and at least one tool for excavating said piece according to said data and/or said second remote operated vehicle can comprise said means for depositing material in at least part of said excavated zone.

Any combination of one or more ROVs with one or more tool(s) is covered by the present invention.

### BRIEF DESCRIPTION OF THE DRAWINGS

- Figure 1 shows a runner of a hydro turbine to which the invention can be applied;
- Figures 2A and 2B show examples of cavitation damage in a runner of a hydro turbine;
- Figures 3A and 3B show examples of cracks in a runner of a hydro turbine;
- Figures 4A - 4D show exemplary steps of a process according to the invention;
- Figures 5A - 5C show examples of defects in a turbine runner;
- Figures 6A - 6C show examples of predefined shapes which can be used in a process according to the invention;
- figure 7 is a schematic representation of a system according to the invention, comprising a remote operating vehicle (ROV), a computer and a display device;
- figure 8 illustrates an aspect of an embodiment of a process according to the invention;
- Figures 9A - 9D show another aspect of an embodiment of a process according to the invention;
- Figures 10A - 10B illustrate an aspect of a scanning step of an embodiment of a process according to the invention;
- figure 11 illustrates a deposition step of an embodiment of a process according to the invention.

### DETAILED PRESENTATION OF PARTICULAR EMBODIMENTS

The invention applies to any piece of metallic material. It can for example apply to bulb, Kaplan, Francis, pump turbine runners or pump impellers or other metallic components of a hydroelectric powerplant. Other industrial applications exist.

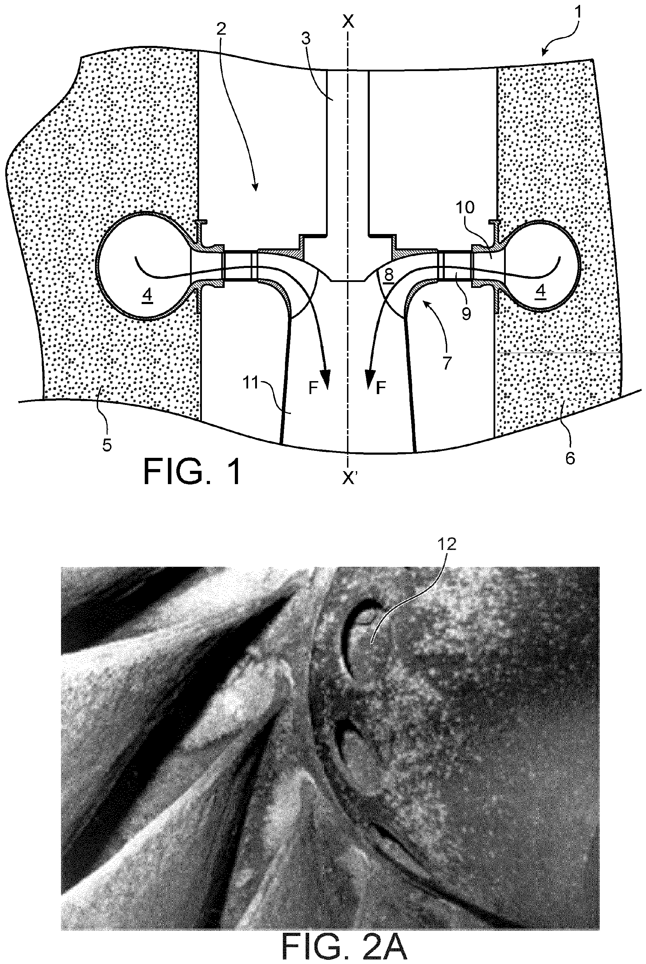

Figure 1 represents a hydraulic machine 1, more precisely a pump turbine 2, for converting hydraulic energy into electrical energy. A shaft 3 is coupled to a runner 7 and to the rotor of a generator (not shown on the figure) which also has an alternator that converts mechanical energy into electrical energy. The machine also includes a spiral case 4 that is supported by concrete blocks 5 and 6.

A penstock (not shown on the figure) extends between a non-represented upstream reservoir and the spiral case 4. When the turbine is operated in a generating mode, this penstock forces a water flow to power the turbine. Water flows between blades 8 of the runner 7 and rotates them around an axis x-x' of the shaft 3.

The machine further comprises:
- a distributor, comprising a plurality of movable guide vanes or wicket gates 9 that are evenly distributed around the runner; each of them has an adjustable pitch around an axis parallel to x-x' and can be swivelled to regulate the water flow rate, all guide vanes being oriented with a same angle relative to a closed position;
- a pre-distributor, which comprises a plurality of fixed vanes (or stay vanes) 10, evenly distributed around the axis of rotation x-x', and disposed upstream of and around the distributor.

Below the runner, water is evacuated through a draft tube and tail water tunnel 11 (discharge ring and/or draft tube).

A hydraulic machine can have many other parts or components, such as a trash rack, one or more gate(s), one or more stoplog(s), a penstock, one or more valve(s), a stay ring.

During the use of the machine to which they belong, all these parts or components, usually made of a metallic material, can possibly be damaged by erosion by cavitation, or erosion by abrasion, or ballistic impacts from solids conveyed in the water flow, or fatigue, or corrosion, or wear, or a combination of those damage modes which can generate local surface deformation(s), and/or cracks, and/or wear, and/or impacts, and/or material loss(es) and/or coating damages.

Such a hydraulic machine therefore must be repaired.

The other kinds of turbines or pump impellers are also concerned by these problems: at least one of the above-mentioned defects or damages, must sometimes be repaired. In particular, the runners of such turbines comprise blades that can suffer from the above mentioned damages which must be repaired.

Cavitation is the vaporization of a volume of a liquid. When this happens adjacent to a solid, the fluid momentum associated with the collapse of the vapour volume can damage the solid material. This problem can be persistent when high velocities and forces are used to move the fluid, as in a turbine or pump. Often, once cavitation damage has occurred in a given location, the likelihood of additional damage in the same place increases.

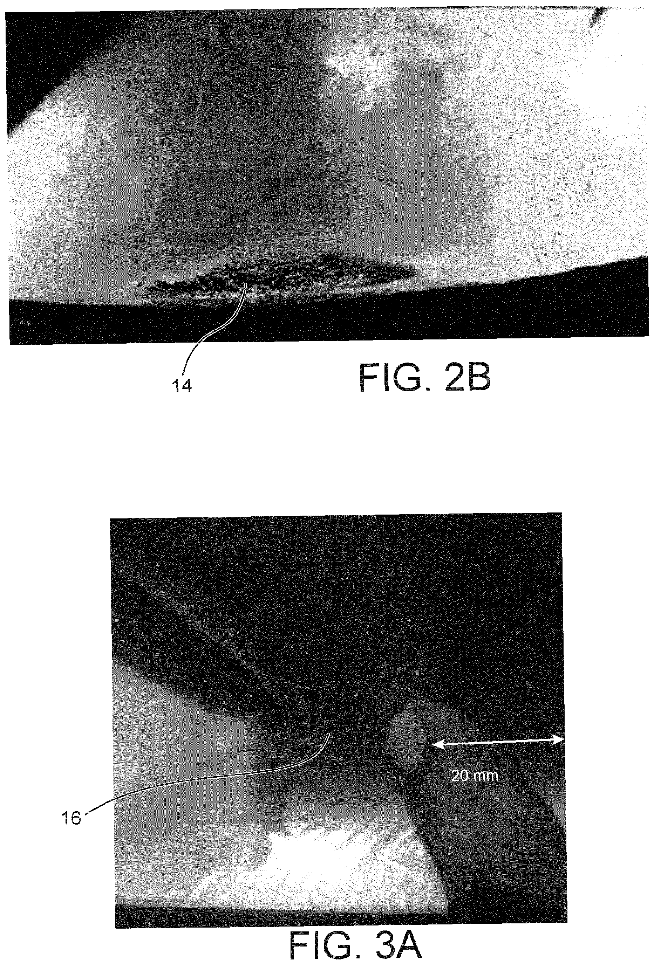

More precisely, cavitation damage usually consists of a surface damage from which material of the hydro turbine or of the runner of said hydro turbine is removed; a cavitation damage can have many different sizes; it can for example have a surface size of about 20 cm x 20 cm, but there are also very small cavitation damages (for example at the beginning of the damage) and then the damage can become larger. A first example of cavitation damage 12 (a crown cavitation damage, at a blade to crown junction) is shown on figure 2A. A second example is shown on figure 2B which represents a clearance cavitation damage 14 (blade tip diameter for a Kaplan turbine).

It has to be noted that a cavitation damage can occur anywhere on both sides of a blade 8 (figure 1), on the crown and on the band surface (not shown on figure 1), at locations that are very difficult to reach and therefore *in situ* reparation is very difficult to achieve. For Francis or pump turbines or pump impellers, the inter-blade distance can be limited and can be for example of about 150 mm or more generally comprised between 500 mm or 300 mm and 50 mm or 100 mm or 200 mm. Even for the largest inter-blade distances (larger than 400 mm), it is very difficult to repair the surfaces of the blades in situ.

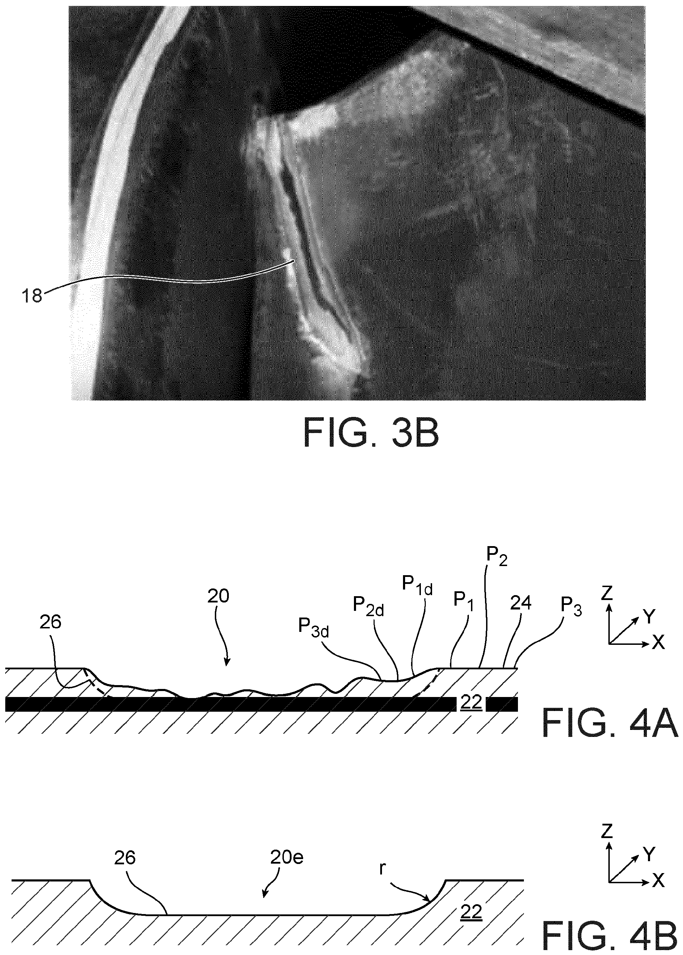

A crack is another example of a defect of a metallic component (for example of the runner of said hydro turbine) to be detected. Cracks are usually surface cracks and then evolve into through-cracks after some time of propagation; they have for example a size of around 5 mm (or more) length, 1 mm (or more) depth, 0.1mm (or more) wide. A first example of a crack 16 is shown on figure 3A: it is a small crack (about 20 mm at band outlet) and should be repaired in a short or medium term in order to avoid a further propagation. A second example is shown on figure 3B which represents an advanced crack 18 (600 mm long at blade inlet); in such case, the hydraulic machine must be stopped in a short or medium term in order to avoid extreme failure. The repair can be done on site (by excavation, welding, grinding).

Cracks can be for example located at the inlet or the outlet of the runner, at the junction between the blades and the crown or the band which are the weakest locations of the runner where the highest stress concentrations occur. For Francis turbines, the majority of cracks is occurring at the runner outlet.

In an embodiment of the invention, a defect or a damage of a piece of metallic material, for example a cavitation damage or a crack, can be first identified and/or located by one or more sensor, for example an Eddy Current sensor and/or for example at least one contactless sensor, for example at least one optical sensor, preferably selected from among a laser, a camera, a laser scanner, a lidar and a telemeter. This step can be performed further to, or during, a visual inspection of said metallic material, an operator identifying a damage or defect and possibly delimiting an "area of interest" which includes the entire defect or damage and its surrounding area.

One or more of the above mentioned sensor(s) can be added on an existing ROV ("Remote Operated Vehicle"), preferably rail free, or AUV ("autonomous underwater vehicle") and can operate for example both in water and in air.

First data, for example first geometrical data, of the damage or of the defect can be generated from the data of the sensor inspecting the defect or the damage.

In this application geometrical data can include a plurality of coordinates or of XYZ coordinates of several points situated on the inspected surface, in particular the surface of the defect, which is not a flat or an even or regular surface. Preferably, as explained below, the inspected surface also comprises an undamaged area (which has an upper surface which is flat or even or regular) close to the defect or surrounding it. Said points may possibly be separated by a given distance (the resolution) and/or the geometrical data may be associated with a certain confidence or accuracy. Such geometrical data can be used to form a "3D" image (or a 3D scan) of the inspected part or component and/or to give a representation of the surface. In combination with the above means, a device according to the invention can comprise a lighting device, in the visible range, for example a lamp or a laser or a LED. A lighting device may allow a sensor to measure faster and/or with more precision any of said first data or first geometrical data, or any of the second to fourth geometrical data disclosed below, or data from which any of said geometrical data can be derived.

In a variant, a device according to the invention is used in combination with another ROV or AUV which carries or comprises a lighting device, in the visible range, for example a lamp or a laser, for the same purpose as mentioned above.

Figure 4A is a schematic representation of a cross-section of a simple defect or damage 20 and of its undamaged surrounding area 24 in a part or component 22, for example a blade of a runner.

As explained above, first geometrical data or coordinates, for example data of points P_{1d}, P_{2d}, P_{3d}, of the upper surface of said defect(s) or damage(s) are measured or generated based on data provided by one or more sensor(s) : it is the "scanning" of the area of interest, which can be performed during a visual inspection of the metallic material or at a later stage.

Based at least on said first geometrical data, it is possible to generate data of one or more zones of said defect(s) or damage(s), in order to excavate said one or more zone, in other words in order to eliminate more material from the piece 22. Thus, for example, data of a surface 26 (represented with a dashed line on figure 4A) located under the upper surface of the defect are generated, which will form a receiving surface for a material to be deposited in said defect(s) or damage(s).

In a particular embodiment, the deepest points of the damage or defect can be identified by comparing at least the "Z" coordinates of said first geometrical data or coordinates, with a theoretical undamaged surface of the piece (for example based on data of the third geometrical data or coordinates as explained below).

Excavation can then be performed. Figure 4B shows the same part or component 22 after excavation, 20e designating the excavated damage or defect. Preferably, one or more corner(s) of the excavated zone has a radius larger than some mm, for example larger than 2 or 2.5 mm, so that the material can then be added into the excavated zones without gaps.

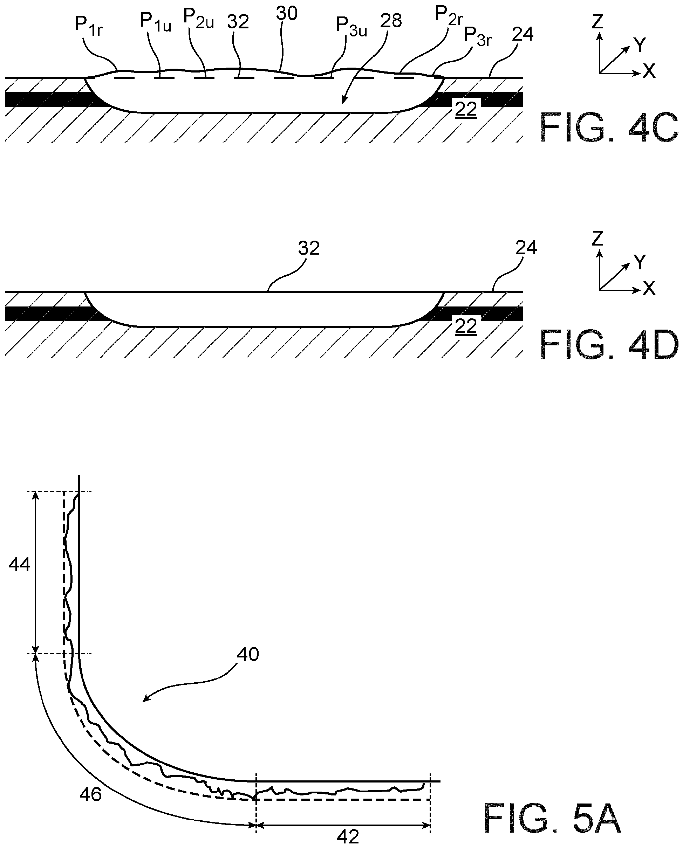

Figure 4C shows the same part or component 22 after material 28 was deposited in said excavated defect(s). This step for example implements addition of material by welding. The added material can be for example homogeneous material, or heterogeneous material, including functional grades.

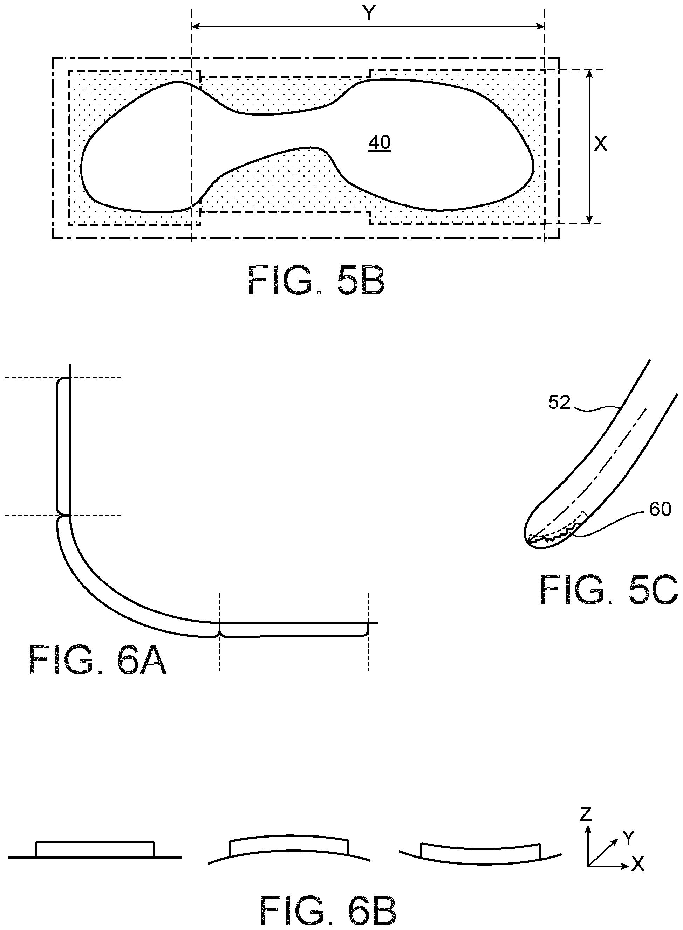

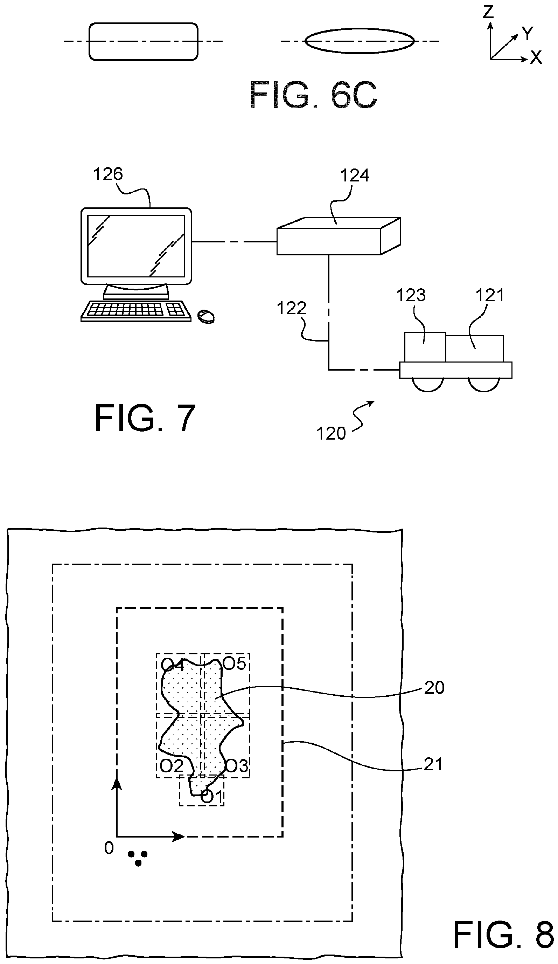

At any of the above steps, second geometrical data or coordinates, for example of points P₁, P₂, P₃, of the upper surface of at least one undamaged part or area 24 of the piece of material, preferably surrounding the damage or the defect 20, can be measured or generated based on data provided by said one or more sensor(s). Such data can be used as "reference" data, the undamaged part or area 24 being considered as a "reference" part or area. Preferably, said second geometrical data or coordinates are measured or generated during the same step as the above first geometrical data or coordinates. In particular, based on the data generated during the above scanning, a damaged area, as well as a "reference area or surface", which is the undamaged area surrounding said damaged area, can be delimited automatically and/or by an operator. To do so, an operator can define, in a control system (for example the system bearing reference 124 on figure 7, described below), at least one threshold or cut-off value Z₀ along the Z axis (perpendicular to the surface of the area): any scanned surface that is at an elevation along the Z axis below the threshold or cut-off value Z₀ can be included in the damaged area and should preferably be repaired. The reference area and damaged area (for example surface 40 on figure 5B, see comments below concerning this figure) are hence delimited. In a process according to the invention, an operator can also further refine the delimitation based on his observations, know-how and experience. Based on this reference area, an "extended reference surface" can be calculated: it can be an interpolation of the reference area or it can be generated based on previous measurements or a 3D model of the initial surface at the location of the defect or damage before the defect or damage occurred.

As can be seen on figure 4C the upper surface 30 of the added material may raise above the expected or theoretical level or surface 32 of said material. For this reason, the surface of the repaired area can be further finished as can be seen on figure 4D, thus forming an upper surface 32 which has the expected level. For this purpose it may be helpful:
- to generate third geometrical data or coordinates of the upper surface of the undamaged or theoretical component, for example of points P₁ᵤ, P₂ᵤ, P₃ᵤ of the expected level 32; these third geometrical data or coordinates may result from previous measurements made on an undamaged part or component and may have been stored in a memory or may result from calculations or simulations; said third geometrical data or coordinates can be obtained by interpolation from said second geometrical data or coordinates; they may be generated before starting any generation or measurement of the above mentioned first and/or second geometrical data or coordinates; the above described data of the extended reference area can form part of said third geometrical data;
- to measure or generate fourth geometrical data or coordinates, for example of points P₁ᵣ, P₂ᵣ, P₃ᵣ of the upper surface of the repaired defect, after the material 28 was deposited in said excavated damage or defect(s).

The third geometrical data or coordinates can be compared with the fourth geometrical data or coordinates in order to decide how the upper surface 30 should be further finished to obtain the required or expected upper surface 32, as represented on figure 4D.

The component of the example illustrated on figures 4A - 4D has a flat upper surface which is particularly adequate for the purpose of this explanation. But the invention also applies to much more complex parts, for example like:
- the one illustrated in the example of figure 5A (cross-section) and figure 5B (top view) which represents a concave portion 46, having a curvature, between a crown or a band 42 and a blade 44, comprising a defect 40 extending over these 3 areas and in particular in the concave portion 46; figure 5B shows the reference area in dark grey, surrounding the defect (or damaged area) 40 in light grey;
- or the one illustrated in the example of figure 5C which represents a blade 52 having a damage or defect 60 at its end, in a convex area of the blade.

The invention can be applied to any other part of a hydraulic machine, for example to a trash rack, and/or to one or more gate(s), and/or to one or more stoplog(s), and/or to a penstock, and/or to one or more valve(s), and/or to a spiral case, and/or to a distributor, and/or to a stay ring, and/or to one or more guide vane(s), and/or to one or more stay vane(s) and/or wicket gate(s), and/or to the draft tube and/or to a runner. It can also be applied to a metallic piece of any other kind, for example in oil and gas applications, in pressure vessels or in the ship building industry.

In a particular embodiment, a method of repairing a piece of material according to the invention, in particular as described above, can comprise the following steps:
STEP 1: a surface shape assessment (Post damage assessment), for example by implementing the generation or the measurement of first geometrical data as explained above;
STEP 2: a substrate shapes preparation by excavation of the damaged area, as explained above;
STEP 3: a shape rebuilding by material addition or deposit on substrate for instance, as explained above;

It may further include:
STEP 4: a surface finishing, as explained above, and/or:
STEP 5: a surface shape assessment (Repaired surface control).

According to an embodiment of the invention, a process according to the invention may involve one or more of the following (in particular during above step 1):
- during a visual inspection of a metallic material, an operator can identify a damage or defect and delimit an "area of interest" which includes the entire defect or damage and its surrounding area; the scanning of the area of interest may be performed, for example during such a visual inspection, or at a later stage;
- based on the data generated during the scanning, a damaged area, as well as a "reference area or surface", which is the undamaged area, or at least part of it, surrounding said damaged area, can be delimited automatically and/or by an operator. To do so, an operator can define, in a control system, at least one threshold or cut-off value. Any scanned surface that is at an elevation on the Z axis below the threshold or cut-off value is included in the damaged area and must be repaired. The reference area and damaged area (for example surface 40 on figure 5B) are hence delimited. In a process according to the invention, an operator can also further refine the delimitation based on his observations, know-how and experience;
- based on this reference area, an "extended reference surface" can be calculated: it can be an interpolation of the reference area or it can be generated based on previous measurements or a 3D model of the initial surface at the location of the defect or damage before the defect or damage occurred. The data of the extended reference area form part of the third geometrical data.

According to an aspect of the invention, the data of the surface 26 (represented with a dashed line on figure 4A) which is the lower surface of the planned excavation located under the upper surface of the damage or defect can be generated from a plurality, or a library, of predetermined shapes which are adapted to the repair process.

Figure 6A shows a plurality of such predetermined shapes combined to form a theoretical shape corresponding to the example of figure 4A.

More generally, each predetermined shape may have a constant depth with respect the extended reference surface (namely with the bottom parallel to the upper surface, both of them being either flat or curved), as illustrated on figure 6B (a view in the XZ plane); the depth of each predefined shape can be, however, adapted to the depth of the excavated area by a control system (for example system 124) or an operator based on first geometrical and third geometrical data.

Figure 6C shows a possible front view of a "primitive". A primitive is a predefined volume, which for example has:
- a cross-section in XZ plan in the form of one of the predefined shapes of figure 6B, the predefined shape having an adjustable depth along the z axis as explained above;
- and a top view surface in the XY plan which is in one of the forms of figure 6C (but other forms may be possible); The dimensions of the surface in XY plan of each primitive are determined based on predefinedtop view surfaces stored in a library of the control system and preferably cannot exceed the working envelope (as explained below).

These primitives and shapes can be memorized in a memory area of the system, for example of a computer 124 or in the ROV itself.

One or more ROV(s) ("Remote Operated Vehicle"), preferably rail free, can be used to implement the invention. Preferably, one or more of said ROV(s) has magnetic wheels, so that it/they can easily remain in contact with the surface which must be scanned and/or repaired, whatever the orientation of the ROV.

One example of a ROV which can be implemented is the "VT34 FW" crawler of Dekra (see https://www.dekra-visatec.com/en/detail/index/sArticle/31). It is quite compact (140 x 55 x 185 mm) and is able to access a large number of turbine runners, preferably magnetic. It can be equipped with a camera having one of the above-mentioned features.

Another ROV which can be used in the frame of the invention is the "GNOM Baby" (see https://gnomrov.com/products/gnom-baby/): it is a very compact swimmer operating as a submarine and equipped with a camera. It is compact enough (21x180x150 mm) to enter in the specified 200 mm interblade distance.

Another device which can be used is the "Bike" of Waygate Technologies, see for example https://inspection-robotics.com/bike/.

A ROV is mounted on wheels and moves along the inspected surface.

A ROV 120 (figure 7), in particular any of the above devices, can be equipped with one or more sensor 121 as mentioned above and possibly a lighting device, adapted to implement the invention. It is in contact with the metallic piece of material to be repaired, for example a blade of a runner.

The ROV 120 can be driven by electric power, for example with help of a battery and/or a motor 123 (figure 7) and/or a power source can be connected via a tether 122 or can be onboard; the ROV can be controlled wireless or via tether 122. It performs one or more steps of the invention automatically (examples of steps automatically performed are given below); for example an operator starts the process and then the different steps of the invention are performed automatically.

It can also comprise one or more tools for repairing surfaces, as explained below.

A plurality of ROVs can be used at the same time to inspect different locations of a runner. A plurality of ROVs can be used, at least one to inspect one or more locations of a runner and at least another one to repair one or more locations of a runner.

On figure 7 the ROV 120 is equipped with one or more camera(s) 121 to perform imaging and thereby provide data of the damage or defect and possibly also of a reference surface which is next to or surrounds the damage or defect. It can be connected by a tether 122 (which can comprise cables and/or wires to exchange data with the ROV and/or to control the ROV and/or to provide the electric power to the ROV) to a computer 124 (for example a microcomputer or a portable computer) which controls the path followed by the ROV and/or the camera(s) and/or a tool and which sends instructions to perform the appropriate inspection and/or repair steps. A tether-less or wireless ROV is also possible, see for example https://www.hydromea.com/exray-wireless-underwater-drone/; it operates autonomously with wireless connection.

Data, in particular the images from a camera(s), and/or from a scanner and/or from any other sensor(s), can be processed (in real time or not) by a processor in the ROV and/or can be transmitted to computer 124 for processing, in particular to generate one or more of the above first to fourth geometrical data; a 3D representation or view of the damage or defect can also be generated and/or an image can be displayed on a display or screen 126 so that an operator can decide whether the hydraulic machine should be repaired. It is also possible to make measurements and generate a map of the damage or defects detected on a blade or on any portion of a metallic piece of material; such a map, giving information about the location of the damages or defects, can be generated by computer 124 and possibly displayed. The illustrated system can be adapted to several ROVs performing inspection of different parts, and/or repairing different parts, at the same time.

One or more ROV can perform the operations or steps of a method according to the invention, for example the operations or steps explained above in connection with figures 3A - 3D; accordingly, one or more ROV can perform:
- a 3D scan (damage characterization, assessment and recording, excavation characterization and recording, surface control (intermediate and/or final stage control));
- excavation (for example) and possibly a surface finishing step;
- and then filling by deposition on the substrate after excavation.

In case of use of several ROVs, each one is preferably able to register its position on the surface with respect to the position of the first ROVs and the position of the area of interest (respectively damaged area and excavated area) in order to ensure that the tool path (respectively excavation strategy and material addition strategy) which is defined, for example on a 3D numerical model generated from a 3D scan, and particularly the origin points, are correctly localized on the real surface.

In some cases, a ROV 120 has a working envelope covering a portion of the inspected piece which is less than the extent of a damage or defect. A working envelope corresponds to the area that can be scanned and/or excavated and/or repaired for one position of the ROV. It may depend on several constraints: for example obstacles in the surroundings of the damage and/or the size of the robot, and/or its arm(s) and/or the tool(s). For this reason, a set of positions of the ROV can be defined and the ROV can be moved from one of said positions to the next one. In particular, if the working envelope of the ROV is smaller than the damaged area, the operator will have to move the ROV. A position of the ROV can be registered by the operator so that once the ROV is driven to such position, then next steps can be performed automatically.

As explained before, the operator is able to delimit the damaged area 20. As illustrated on figure 8, based on this data, the operator is able to select a number of primitives or predefined shapes from a library in a control system (for example system 124) to create a paving over the entire area of the damage or defect 20, corresponding to areas O¹-O⁵. Alternatively, a control system can perform this step automatically based on predefined primitives and shapes stored in a library; preferably the operator can then adjust the selected primitives or predefined shapes based on his own experience and know how.

The plurality of primitives defines the working area. Each O¹-O⁵ area in this example encompasses a part of the damaged area and a part of the reference area.

In the example of figure 8 an operator has identified an area of interest during for example an inspection. In this example, the working envelope of the ROV is larger than the scanned surface 21 and larger than the working area, which is the external perimeter of all primitives. Therefore only one position of the ROV has to be registered to perform the scan and the repair process in each of the O¹-O⁵ areas.

Each area O¹-O⁵ is the top view of a primitive. The shape and dimensions of O¹-O⁵ areas depends on primitives available in a library which have been predefined based on excavation or welding limitations for instance and prequalified.

Each primitive can have a cross-section from among the cross sections illustrated on figure 6B. Its depth can be set up or adjusted to be the difference between the elevation of the extended reference surface and the local deepest point of the damaged surface at this location (obtained by comparing at least part of first and third geometrical data).

Thanks to the decomposition of the damaged area into primitives having cross sections in the form of predefined shapes, for example those of figure 6B, some steps of the process, for example those described below, can be automatically carried out.

The terms "predefined" and "prequalified" used in the previous paragraphs mean that the excavation, material deposition and finishing sequences using a ROV system and a robotized repair method according to the present invention may have previously been tested and validated on samples that have the same shapes as the primitives and across a range of dimensions that are available in the libraries. This is a significant advantage of the invention since the use of simple predefined shapes and primitives for which the repair method has been previously tested and qualified enables to carry out some steps automatically, to have a repeatable process, optimizing repair time and significantly limiting the risk of defects resulting from the repair sequence.

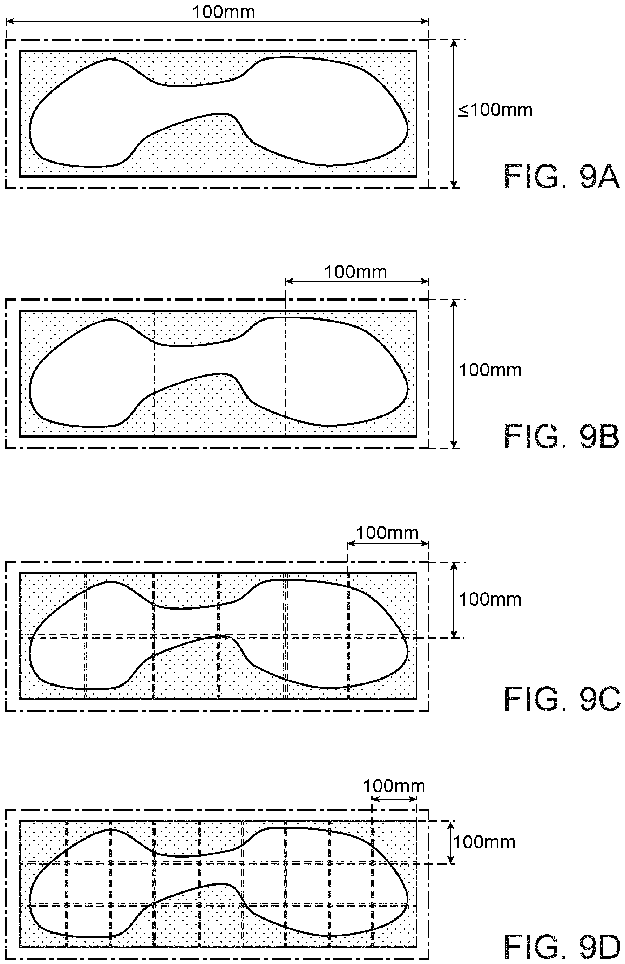

As illustrated on figures 9A to 9D (on which the dimensions indicated are just examples), the entire area of the damage or defect, and preferably of at least part of the surrounding area, may be covered by one or more primitives. For example, a single primitive can be defined for a small damage or defect 20 (figure 9A), or a number of n primitives forming a single row, or a plurality of pᵣ rows each comprising a number of nᵢ primitives (1≤ i ≤ pᵣ), pᵣ =1 for figure 9B, pᵣ =2 for figure 9C, pᵣ =3 for figure 9D. The operator combines one or more primitives to create a paving covering the entire area to be repaired.

Depending on the size of the defect or damage, different scanning strategies can be implemented; for an optical sensor, the width of the area that it is able to scan depends on the distance between said sensor and the part. The scanning strategy is therefore dependent on the overall space available around the area to be scanned. Moreover, for very marked topologies, several scanning angles may be necessary to correctly describe the actual facies (peaks or hollow areas).

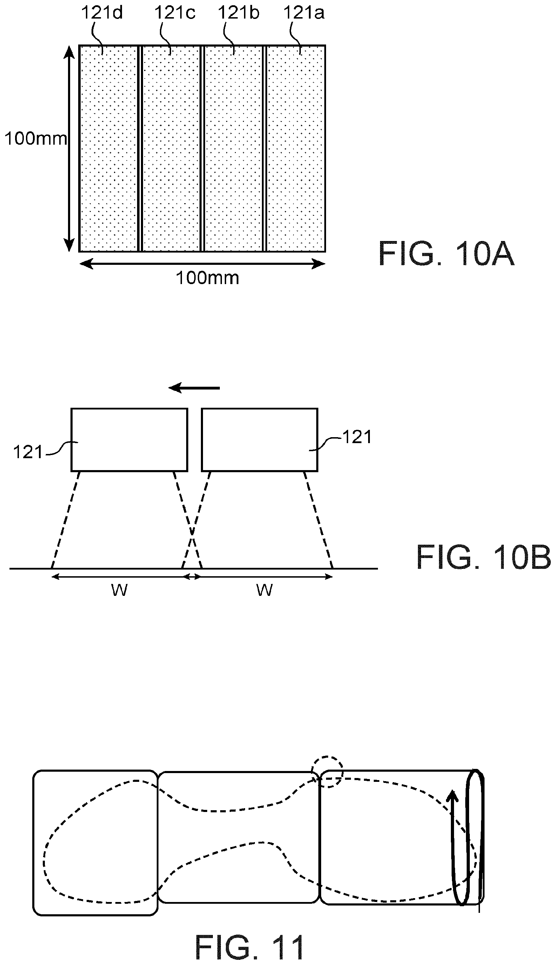

As illustrated on figure 10A (on which the dimensions indicated are just examples), scanning to measure data to generate one or more of said first to fourth geometrical data can be performed along a plurality of parallel lines with a same sensor 121 which is an effective and rapid way to scan (on figure 10A a same sensor is represented at successive positions 121a, 121b, 121c, 121d); Preferably, as illustrated on figure 10B overlapping neighbouring areas can be scanned with a same sensor 121, which has 2 benefits: there is no risk to miss any geometrical data between two neighbouring scanning lines and the overlap enables to geometrically fit the data of the second line with the first line. The pitch of the sensor, from one scanning position to the other, can be determined as a function of the width of the width W (for example 30 mm) of the beam on the surface minus the width of the overlap (for example ≥ 1.5 mm and/or ≥ 5 %).

As illustrated on figure 11, the steps of a repair process, for example, the excavation of the damaged or material deposition in the excavated area or the finishing of the rough repaired area, can follow a predefined process strategy which can be stored in a computer program. Predefined process strategies mean that for a given primitive, the trajectory and geometric parameters of the excavation, material deposition or finishing sequence according to the invention have been pretested and prequalified on samples that have the same shapes as the primitives and across a range of dimensions that are available in the primitives library. The strategies are based on optimisation criteria and specific process requirements. For example, the strategy may have been predefined to improve soundness of deposited material and/or limit discontinuity; in particular, the material deposition can be optimized from the metallurgical viewpoint (for example thermally and/or to optimize compactness and/or to avoid discontinuities). For example the tools can follow a meandering path which can be determined and/or optimised by a computer program. The use of pretested and pre-validated process strategies is another major benefit of the invention. It is efficient, and the excavation, material deposition and finishing steps can be done automatically, which reduces the risk of creating a defect and is repeatable.

As explained above in connection with figure 7, a control system (for example a computer) 124 can be implemented to perform one or more steps of a process according to the invention.

Some steps of a process according to the invention can be controlled by an operator, for example through the control system 124; examples of such steps are :
- driving the ROV from any access point (for instance manhole in the spiral case or draft tube) to the area of interest
- the selection of one or more scanning strategy of the area of interest or part of the area of interest, for example from among predefined strategies stored in a control system memory and/or the adaptation of such strategy/strategies;
- and/or the setting and/or adjustment of the boundaries of the reference surface (undamaged) and of the damaged area; alternatively, this step can be performed automatically by a control system which is programmed or adapted to automatically delimit undamaged surface(s) and damaged surface(s) and provide a first draft of delimitation to an operator who can then adjust manually;
- and/or the calculation of the theoretical former surface by polynomial interpolation of the reference surface using a computer program
- and/or the selection of the needed predefined shapes/primitives based on geometrical considerations of the damaged area; alternatively, this step can be performed automatically by a control system (for example system 124, 126) which is programmed or adapted to automatically select relevant primitives/predefined shapes in a library and based on geometrical data;
- and/or the definition of a paving of the damaged surface using the selected primitives. The paving subdivides the damaged areas into smaller areas (the primitives having a cross-section in the shape of one of figures 6B) that can be repaired using prequalified process strategies; alternatively, this step can be performed automatically by a control system (for example system 124, 126) which is programmed or adapted to automatically create a paving of the damaged area and provide a first draft of paving to an operator who can then adjust it manually;
- and/or the manual generation of an excavation volume based on the selected primitives/predefined shapes, for example using the cross-sections of the damaged area to identify the deepest level for each primitive; the excavation volume may be generated automatically and/or by the operator by setting/adapting the depth of the predefined shape to the deepest level of the damaged area;
- and/or the registration of the ROV location using a dedicated sensor and/or using a tool tip as a 3D contact control machine: for example the operator can teleoperate the positioning of the vehicle, but the exact position will be determined based on information captured by a sensor. For example, a laser sensor which makes it possible to determine the position of the sensor in relation to one or more reference point(s) or area(s) on the progression surface, and therefore to derive the position of the vehicle therefrom and by extension of the arm, the tools and the working area in relation to these points, which enables to match the digital model to the physical work area;
- and/or the manual selection and/or setting and/or adjustment of excavation sequence(s) and/or of the material addition sequence (by welding for instance) for each selected primitive area, for example using predefined and/or pretested and/or prequalified strategies stored in the control system 124 memory, for example having a trajectory following zigzags or overlapping parallel lines or centripetal or centrifugal patterns and/or a contour path, being performed in several layers depending for example on the depth of the damaged area;
- and/or the excavation sequence start order and/or the material addition sequence start order;
- and/or the setting of the needed final surface shape; by comparing the fourth geometrical data with the third geometrical data, the operator can set a threshold upon which the finishing operation is carried out. ;
- and/or the manual selection and/or setting and/or adjustment of one or more surface finishing sequence(s), for one or more of the repaired area(s), using for example predefined and/or pretested and/or prequalified strategies stored in the control system memory, for example having a trajectory following zigzags or overlapping parallel lines or centripetal or centrifugal patterns and/or a contour path, being performed in several layers depending for example on the depth of the excavated area;
- and/or the surface finishing sequence start order;
- and/or the repaired surface scanning strategy selection and adaptation, for example based on predefined strategies, for example scanning strategies, which can be stored in the control system memory), for example having a trajectory following zigzags or overlapping parallel lines as in figures 10A and 10B or centripetal or centrifugal patterns and/or a contour path;

Some steps of a process according to the invention can be automatically performed (based on an algorithm which comprises the instructions for performing the required steps), for example by the control system 124; examples of such steps are:
- the scanning of the damaged area(s) and of the surrounding undamaged area(s) once the scanning strategy has been selected;
- and/or the automatic generation of a 3D model including damaged and/or undamaged area(s);
- and/or the automatic generation of a delimitation between reference surface and damaged surface; such delimitation may then be validated or adjusted by an operator
- and/or the automatic calculation of the working envelope in 3D space which for example is based on a combination of several individual working envelopes of the ROV, comprising for example its arm, and/or the tool(s), and/or the sensor(s)
- and/or the automatic generation of a paving similar to figure 8 for example, of one or more damaged surfaces using primitives/predefined shapes; such paving may then be validated or adjusted by an operator
- and/or the automatic generation of the cross-sections based on first and second geometrical data that are needed to identify the location of the deepest level of each primitive/predefined shape
- and/or the excavation and/or the material addition and/or the surface finishing and/or the surface scanning of the repaired area and surrounding unrepaired area ;
- and/or the automatic generation of a 3D model including repaired and non-repaired areas;
- and/or the automatic generation of a delimitation between reference surfaces and/or repaired area(s), such delimitation may then be validated or adjusted by an operator;
- and/or the automatic compliance evaluation based on geometric criteria and tolerances, for example fixed by the operator;
- and/or the automatic generation of a preliminary control report.

Being automatically performed, any of the above steps may be launched by an operator and once launched, any if such step does not require human intervention.

A plurality of devices according to the invention can be used at the same time to inspect different locations of a device, for example a runner. For example, one sensor of one such device provides vision with an imaging device, for example a camera, for example in the visible range, another one providing light or other wavelength (for example: IR) analysis with another camera.

An example of a process according to the invention can comprise one or more of the following steps:
- A step of scanning the damaged area and the surrounding undamaged area (the so-called reference area);
- and/or a step of automatic generation of a 3D model including damaged and undamaged area;
- and/or a step of a control system performing an automatic delimitation between reference surface(s) and damaged area(s);
- and/or a step of manual setting and/or adjustment, by the operator, of the boundaries between the reference surface s and the damaged area;
- and/or a step of calculation of the theoretical former surface (interpolated from the reference surface);
- and/or a step of automatic calculation of the working envelop in 3D space by the control system;
- and/or a step of an automatic generation of a paving of the damaged area using primitives;
- and/or a step of manual setting and/or adjustment of the paving, by the operator, using primitives/predefined shapes;
- and/or a step of automatic identification using a control system of the deepest points normal to the interpolated surface in each primitive area by comparison between theoretical former surface and z value for each (x,y) point;
- and/or a step of automatic generation of cross-sections based on geometric parameters defined in the control system, for example to locate the highest and/or deepest points for each primitive;
- and/or a step of manual selection and/or setting and/or adjustment of the cross sections by the operator;
- and/or a step of automatic generation of a preliminary excavation volume based on primitives/predefined shapes selection (for example by, or with the help of, the control system) shown to the operator on the cross-sections (the bottom of the excavation is to be defined as a translation in depth of the extended reference surface down to the deepest level, to ensure the bottom of the excavation is parallel to the reference surface);
- and/or a step of manual setting and/or adjustment of excavation shapes and primitives/predefined shapes selection by the operator;
- and/or a step of automatic generation of a preliminary excavation sequence for one or more of the primitive areas by the control system;
- and/or a step of manual setting and/or adjustment of excavation sequence by the operator;
- and/or a step of machining sequence start and/or end of excavation sequence;
- and/or a finishing step of material deposition;
- and/or a finishing step.

One or more of the above steps can be repeated, in particular:
- the step of scanning of the damage area and the surrounding undamaged area;
- and/or the step of automatic generation of a 3D model including damaged and undamaged area;
- and/or the step of calculation of the theoretical former surface (interpolated from reference surface);
- and/or the step of automatic calculation of the working envelop in 3D space by the control system.

The process according to the invention can further comprise:
- A step of automatic evaluation (by the control system) of the excavation results by comparison between excavated surfaces, for example as defined by the operator, using one or more primitive(s) from a preceding step and resulted excavated surfaces;
- and/or a step of manual control by the operator, for example on the cross-sections, that the excavation volumes are compliant with the needs;
- and/or a step of quality control of the excavation, based for example on the bottom and/or the sides of the excavated zone; for example a defect library may have been previously established and excavation performed or can be compared to one or more elements of said library.

Compared to conventional repair strategies, the invention offers the following advantages:
- The time of repair is reduced as it is carried out on site ;
- The safety of repair is increased as it does not require humans to enter the runner and no handling of heavy loads (no need to dismantle the runner) ;
- The repair can be carried out in constrained areas, where welding by a human would be very difficult.
- The quality of the repair can be improved thanks to the use of prequalified reproducible sequences by a ROV.

Compared to the known repair strategies implementing a robot:
- the robot can access all areas of the runners (this includes inter-blade areas as low as 150mm);
- the robot can work on smaller runners (surfaces with minimum curvature radius of 10cm);
- the robot is well anchored on curved surfaces or can handle surface transitions to navigate from the draft tube or spiral case to the defect area (using remote control).
- the welding can be more precise and faster as it can be at least semi-automated.

## Claims

1. Method for repairing a damage or a defect (20, 40, 60) in a piece (22) of metallic material, comprising:
- a) Measuring with at least one sensor (121) of a remote operated vehicle (120) first geometrical data of at least a plurality of points or areas of the defect or damage;
- b) based on at least on said first geometrical data, generating data of one or more zones of said defect or damage to excavate;
- c) excavating with help of a remote operated vehicle (120) said piece according to said data of one or more zones of said defect or damage to excavate, thereby forming an excavated zone;
- d) depositing metallic material (28) with help of a remote operated vehicle (120) in at least part of said excavated zone.

2. Method according to claim 1, wherein said step b) comprises selecting and/or generating one or more predefined shape or volume from a plurality of predetermined shapes.

3. Method according to any of claims 1 or 2, wherein said sensor (121) comprises at least one contactless sensor, for example at least one optical sensor, preferably selected from among a laser, a camera, a lidar and a telemeter.

4. Method according to any of claims 1 to 3, further comprising, preferably before step d), generating or measuring second geometrical data of at least one undamaged part of the piece of material, preferably surrounding the damage or the defect, said second geometrical data being for example interpolated from measured data.

5. Method according to claim 4, wherein step b) is based on said measured first geometrical data of said defect or damage and said second geometrical data of said at least one undamaged part.

6. Method according to claim 1 to 5, further comprising generating third geometrical data comprising data of the piece of metallic material without the defect or damage.

7. Method according to claim 6, further comprising after step d), a step e) of measuring fourth geometrical data of said repaired piece of material, for example of an upper surface (30) of the material deposited in said at least one excavated zone, and comparing said fourth geometrical data with said third geometrical data.

8. Method according to any of claims 1 to 7, further comprising before step c) estimating at least one geometrical data of the deepest point or area of said damage or defect, with respect to at least one undamaged portion of said piece of material or with respect to geometrical data of said at least one undamaged portion.

9. Method according to claim 8, steps c) comprising excavating down to a level equal or below said deepest point or area.

10. Method according to any of claims 1 to 9, further comprising, after step d), a step f) of eliminating some material from said material deposited during step d).

11. Method according to any of claims 1 to 10, wherein said one or more ROV(s) is teleoperated to reach the damage or defect and/or step c) and/or step d) is/are performed automatically.

12. Method according to any of claims 1 to 11, wherein said piece is a part of a hydro power plant (1), such as a trash rack, or a gate, or a stoplog, or a penstock, or a valve and/or of a turbine component including a spiral case, or a distributor, or a stay ring, or a guide vane, or a stay vane, or a runner, or a discharge ring and/or a draft tube

13. System for repairing a damage or a defect in a piece of metallic material, comprising at least one remote operated vehicle (120), said system comprising:
- a) at least one sensor (121) for measuring first geometrical data of at least a plurality of points or areas of the defect or the damage
- b) means for sending at least said measured first geometrical data, and means for receiving data of one or more zones of said defect or damage to excavate;
- c) at least one tool for excavating said piece according to said data of one or more zones of said defect or damage to excavate;
- d) means for depositing material in at least part of said excavated zone.

14. System according to claim 13, wherein said sensor (121) comprises at least one contactless sensor, for example at least one optical sensor, preferably selected from among a laser, a camera, a lidar and a telemeter.

15. System according to claim 13 or 14, said means for depositing material in at least part of said excavated zone comprising one or more welding tool(s).

16. System according to any of claims 13 to 15, comprising at least a first remote operated vehicle (120) and a second remote operated vehicle, wherein:
- said first remote operated vehicle comprises said at least one sensor for measuring first geometrical data of at least a plurality of points or areas of the defect or the damage and said means for sending at least said measured first geometrical data;
- said second remote operated vehicle comprises said means for receiving data of one or more zones of said defect or damage to excavate, said at least one tool for excavating said piece according to said data and said means for depositing material in at least part of said excavated zone.
